## Europäisches Patentamt
## European Patent Office
## Office européen des brevets

(11) Publication number: **0 173 511**
A2

# EUROPEAN PATENT APPLICATION

(21) Application number: **85305742.0**

(22) Date of filing: **13.08.85**

(51) Int. Cl.⁴: **A 47 C 7/18**, A 47 C 7/14, A 47 C 7/46, B 60 N 1/06, A 47 C 1/023

(30) Priority: **13.08.84 GB 8420540**

(43) Date of publication of application: **05.03.86** **Bulletin 86/10**

(84) Designated Contracting States: **BE DE FR GB IT NL SE**

(71) Applicant: **SU BUTEC LIMITED, Hurst Lane, Tipton West Midlands DY4 9AD (GB)**

(72) Inventor: **Smith, John Tudor, 10 Als Street, Llanelli Swansea (GB)**
Inventor: **Holloway, Ian Pemberton, 2 Havergal Close, Caswell Swansea (GB)**

(74) Representative: **Unwin, Stephen Geoffrey et al, ARG Patent Department Cowley Body Plant, Oxford OX4 5NL (GB)**

(54) **Vehicle seats.**

(57) Vehicle seat having a cushion pan (1) with an integral suspension formed by a seat panel (5) hinged at its front edge (6) to the pan (1) and having its free end connected to the sides (1B) of the pan (1) by springs (7), a squab (2) with a movable back rest panel (15) which is shaped to provide lumbar support and which can be secured to the squab (2) in different positions to provide adjustment of the lumbar support, and a mechanism for simultaneously adjusting the length and height of the cushion pan (1) by extending a front part (19) of the pan (1) and jacking up a rear part (18) of the pan (1) under the control of a hand wheel (20).

0173511

VEHICLE SEATS

This invention relates to vehicle seats, particularly a driver's seat in an automobile.

Known vehicle seats have a cushion pan comprising a metal frame with some form of suspension system such as a flexible mesh attached thereto and which in use is covered by a relatively thick cushion, or comprise a substantially rigid plastics moulding which in use is covered by a relatively thick cushion.

According to a first aspect of this invention, there is provided a vehicle seat having a cushion pan comprising a seat portion which is integrally formed with a front portion of the cushion pan so as to be hingedly attached thereto and resilient means providing a suspension for the seat portion with respect to the remainder of the cushion pan.

Preferably, the front portion of the cushion pan is reinforced by ribs to provide anti-submarine restraint.

According to a second aspect of this invention, there is provided a vehicle seat having a squab comprising a back rest portion which is integrally formed with an upper portion of the squab so as to be hingedly attached thereto and resilient means providing a suspension for the back rest portion with respect to the remainder of the squab.

- 2 -

0173511

The side portions of the squab may be integrally formed with the upper portion thereof and the upper portion may be reinforced by ribs to provide a housing for receiving a head restraint.

Preferably, the resilient means are springs connecting the back rest portion to the remainder of the squab. The springs are preferably connected between each lateral edge of the back rest portion and the adjacent side portion of the squab.

The cushion pan and/or the squab may be formed of a plastics moulding.

A number of different lumbar adjustment mechanisms in vehicle seats are known in which the lumbar region of the squab is deformed by an adjustment bar or is moved backwards and forwards thereby relative to the remainder of the squab.

According to a third aspect of this invention, there is provided a vehicle seat having a squab with a back rest panel which is shaped so as to provide lumbar support for an occupant of the seat, the entire back rest panel being selectively moveable with respect to the squab between a plurality of positions to adjust the distance between the cushion pan and the shaped area of the back rest panel.

Many different types of seat are known in which the height or inclination of the cushion pan can be adjusted. Seats providing for adjustment of the length of the cushion pan are also known.

0173511

According to a fourth aspect of this invention, there is provided a vehicle seat having a cushion pan the length and height of which can be adjusted simultaneously, the cushion pan comprising a control member which is drivingly connected to a first mechanism arranged to adjust the length of the cushion pan and to a second mechanism arranged to adjust the height of at least a portion of the cushion pan relative to a structure for connecting the seat to a support on a vehicle floor.

The first and second mechanisms are preferably arranged so that the cushion pan is lengthened whilst the said portion of the cushion pan is lowered.

The second mechanism may comprise a jacking device connected between the said structure and a rear portion of the cushion pan.

Preferably, the control member is manually adjustable by a person sitting in the seat.

The different aspects of the invention detailed above may be incorporated in a seat seperately or in any combination with each other.

Further preferred features of the invention will be apparent from the subsidiary claims of the specification.

This invention also relates to a vehicle having at least one seat as detailed above.

0173511

This invention will now be described, merely by way of example, with reference to the accompanying drawings, in which:-

Figure 1 is a perspective view of a preferred embodiment of a seat incorporating features of the first and third aspects of this invention;

Figure 2 is a perspective view of a side structural member of the seat shown in Figure 1;

Figure 3 is a more detailed perspective view of the cushion pan of the seat shown in Figure 1 incorporating features of the first aspect of this invention;

Figure 4 is a more detailed perspective veiw of the squab of the seat shown in Figure 1 incorporating features of the third aspect of this invention;

Figure 5 is a perspective view of a preferred embodiment of a seat similar to that shown in Figure 1 but also incorporating features of the fourth aspect of this invention;

Figure 6 is a more detailed perspective view of the cushion pan of the seat shown in Figure 5 incorporating features of the first and fourth aspects of this invention; and

- 5 -

0173511

Figure 7 is a detailed perspective view of an adjustment mechanism used in the seat shown in Figure 5 incorporating features of the fourth aspect of this invention.

It should be noted that all directional terms such as fore and aft, up and down, and laterally used in this specification relate to directions relative to a driving seat in the conventional position in a motor vehicle.

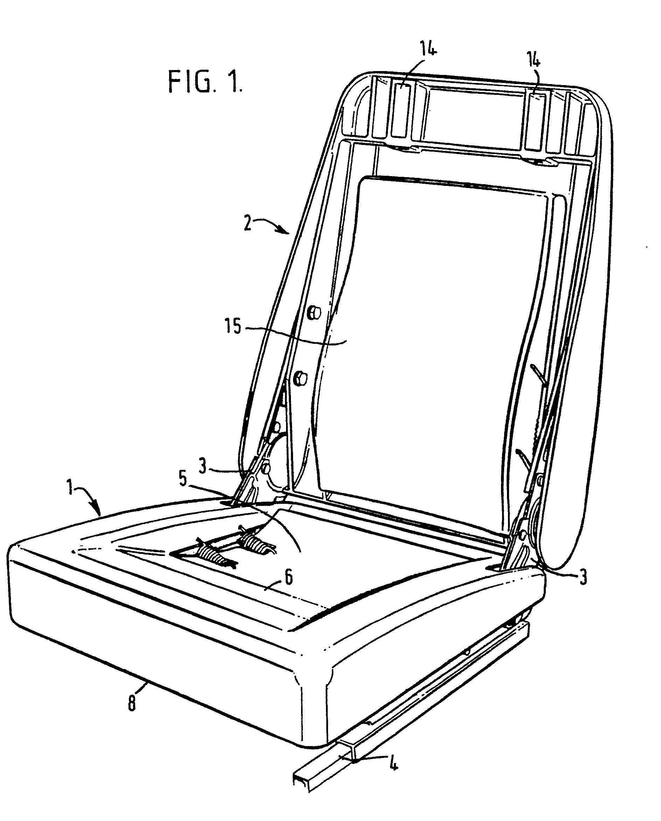

Figure 1 shows a perspective view of a seat. The seat comprises a cushion pan 1 and a squab 2, the pan and squab being structurally interconnected by means of side structural members 3. The side structural members 3 bear directly on support runners 4 mounted on a vehicle floor (not shown).

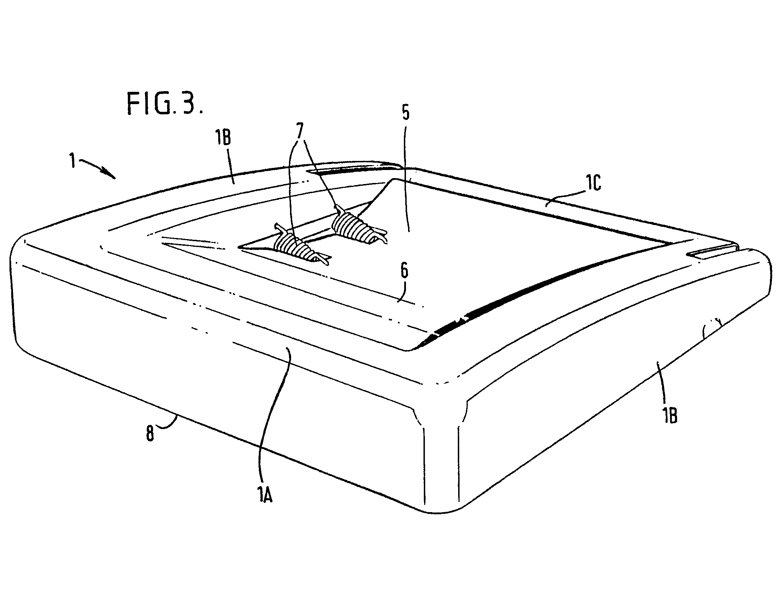

Figure 3 illustrates the cushion pan of the seat shown in Figure 1 in more detail. The cushion pan 1 is preferably formed of a hot pressing made from glass-mat reinforced polypropylene (or other reinforced thermoplastics material) or may be a plastics moulding. The front portion 1A and two side portions 1B are thus integrally formed together and the back portion 1C may also be integral with this assembly. The cushion pan 1 has, as an integral part thereof, a shaped flap 5 which forms a seat portion of the cushion pan 1. The flap 5 is integrally formed with the front portion 1A of the pan 1 and is thus hinged at its forward edge 6 to the cushion pan 1. In an alternative arrangement it might also be appropriate for the flap 5 to be integrally connected with the back portion 1C of the seat pan 1.

- 6 -

0173511

The flap 5 is appropriately shaped to give the cushion pan 1 the desired form to support a person sitting in the seat and is movable up and down with respect to the remainder of the cushion pan 1. However, each lateral edge of the flap 5 is connected to the remainder of the cushion pan 1 by a number of springs 7. Two such springs 7 are shown along one lateral edge; in this embodiment, there will be a further two such springs on the opposed lateral edge. Any appropriate number of springs can, of course, be used. The springs provide the required suspension in the cushion pan 1. The suspension thus forms an integral part of the cushion pan 1 so as to provide a simplified structure compared to conventional arrangements and in use need only be covered by a relatively thin cushion.

The load/deflection characteristics of the complete seat are determined by the number, location and strength of the springs used; these variables can be readily tuned in order to complement the vehicle's primary suspension. Thus, the same cushion pan can be used in different vehicles by simply installing the appropriate type and number of springs.

As an alternative to using springs to provide the required suspension, the flap 5 could be supported on elastic strips or bands (not shown) stretched between the two side portions 1B of the cushion pan 1.

The front portion 1A of the seat pan 1 is heavily ribbed preferably on the underside 8 to provide anti-submarine restraint.

The cushion pan 1 may be self-coloured and may have a grained-surface, particularly in areas which are to be exposed in the complete seat. In addition, fabrics can be readily incorporated in the visible areas during the hot pressing process, or in a subsequent manufacturing stage. Other decorative material may be incorporated similarly; this adds to the flexibility of trim style available.

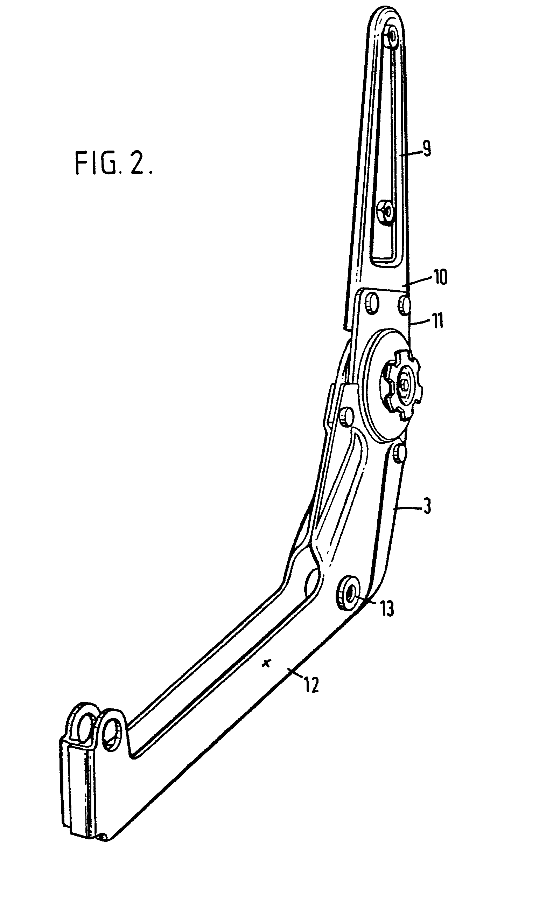

Figure 2 shows a perspective view of a side structural member 3 which comprises an upper member 9, for example a steel pressing, for attachment to the squab 2. The lower end 10 of the member 9 has attached thereto a reclining mechanism 11, in such a way that sideways parting of the reclining mechanism 11 is resisted. The reclining mechanism 11 is further connected to a lower member 12 (again, preferably a steel pressing); this is an integral angular member which is such that, when attached to the support runners 4, the structural loading of the seat is borne directly thereby. The lower member 12 incorporates seat belt anchorage points 13. Each seat has two side structural members of the type shown in Figure 2; one at each side.

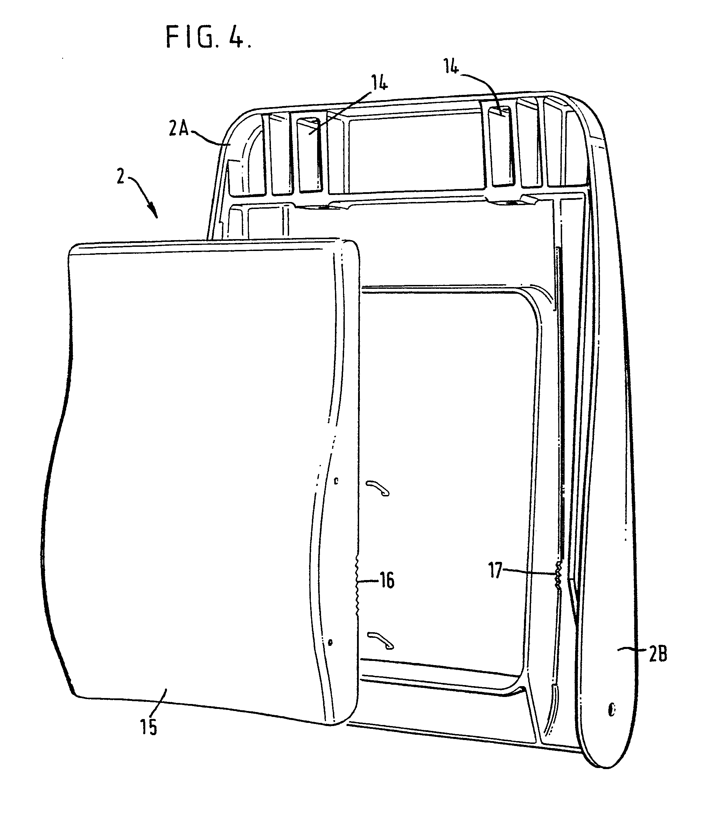

Figure 4 illustates the squab 2 shown in Figure 1 in more detail. The squab 2 is, as shown, a plastics moulding, such as a hot pressing made from glass reinforced thermoplastics, similar to the seat pan illustrated in Figure 3. A top portion 2A of the squab 2 is ribbed to provide head restraint housings 14. No additional components are thus needed to receive head restraint stalks (not shown) as the housings 14 are integral with the squab 2. The use of a squab of glass-reinforced thermoplastics with integral

0173511

housings for head restraint stalks also provides protection for rear seat occupants as the use of sharp and hard edges can be avoided. It also enables the support for the head restraint to be simplified as compared to conventional arrangements.

The squab 2 has a removable elastically deformable back rest panel 15 which is also preferably formed of glass fibre reinforced thermoplastics material. The panel 15 is anatomically shaped to provide lumbar support for a person sitting in the seat. The side portion 2B of squab 2 and the panel 15 have, at each side thereof, complementary engageable teeth 16 and 17, whereby the resulting tooth engagement enables a very simple vertical lumbar adjustment to be obtained by selectively shifting the panel 15 upwards or downwards with respect to the remainder of the squab 2, this adjustment altering the distance between the shaped area of the panel 15 and the cushion pan 1. It is also possible to provide simultaneous fore and aft adjustment by a suitable inclination of the engaging teeth 16 and 17 with respect to the plane of the squab 2. The arrangement is preferably such that adjustment of the backrest panel 15 can be effected by simply manually moving the portion of the panel 15 carrying the teeth 16 forwards so as to disengage from the teeth 17 on the side portion 2B of the squab 2 and then manually shifting the panel 15 upwardly or downwardly to the desired position and then allowing the teeth 16 and 17 to re-engage in the new position.

The side portions 2B of the squab 2 are radiussed about the axis of the recline mechanism 11 and engage with corresponding parts in

- 9 -

0173511

the cushion pan 1, thus eliminating the need for separate mechanism covers.

As an alternative to the squab 2 illustrated in the Figures, it may be desirable to form it in a manner similar to the cuhion pan 1 described above. Such a squab would thus comprise a backrest panel in the form of a shaped flap which is integrally formed with the top portion 2A of the squab 2 so as to be hinged thereto about its upper edge. In a preferred arrangement, the shaped flap, the top portion 2A and the two side portions 2B of the squab would be integrally formed as one assembly. As in the cushion pan 1 described above, the lateral edges of the backrest flap would be connected to the side portions 2B of the squab by a suitable number of springs which would thus provide the required suspension between the backrest panel and the remainder of the squab, or elastic strips or bands could be stretched between the side portions 2B behind the backrest panel to provide the suspension.

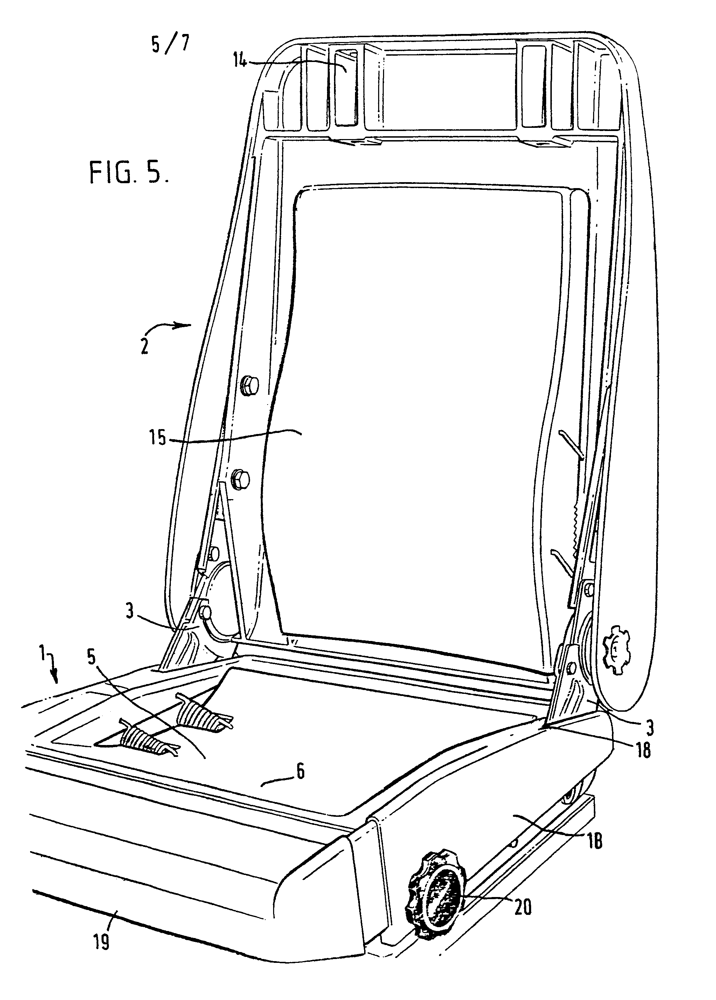

Figure 5 shows a perspective view of a seat similar to that shown in Figure 1 but which is provided with a mechanism for simultaneously adjusting the height and length of the cushion pan 1. This mechanism enables a rear portion 18 of the cushion pan 1 to be lowered at the same time as the length of the cushion pan 1 is increased by virtue of an expansible nose portion 19. The adjustment is achieved in the illustrated seat by means of a manually adjustable hand wheel 20 connected to a shaft which passes through a hole 21 in the side portion 1B of the cushion pan 1.

0173511

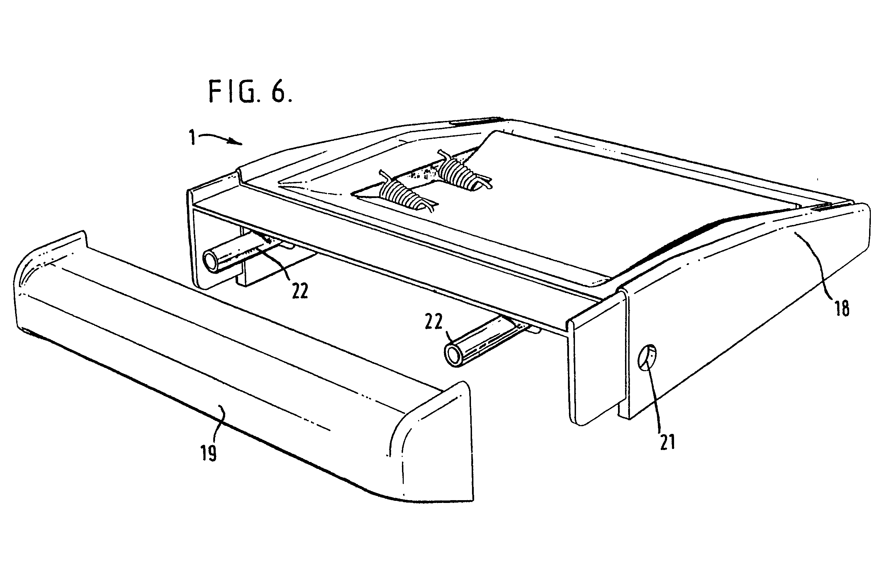

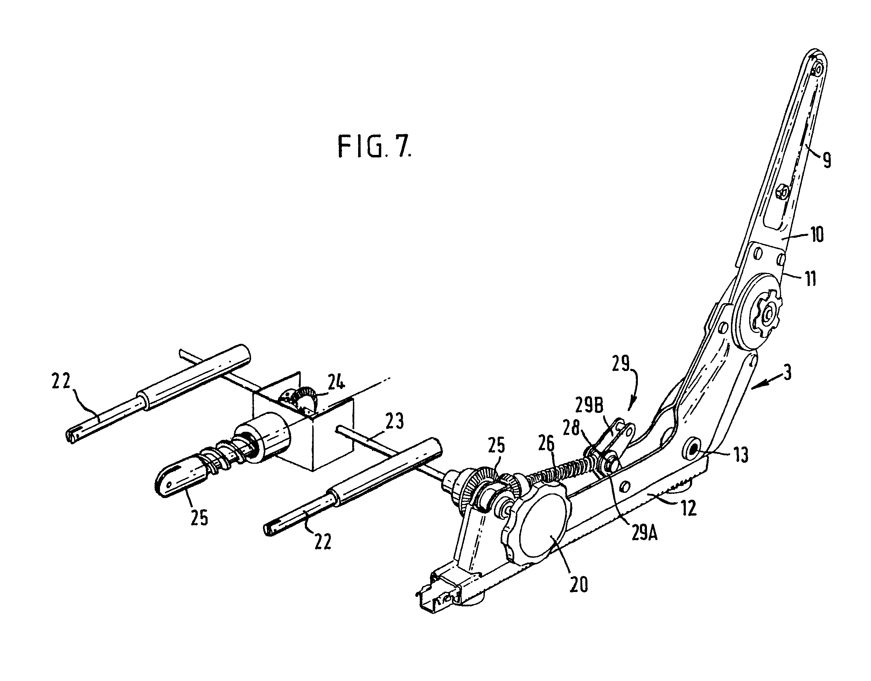

Figure 6 shows the construction of the expansible nose portion 19 in more detail and Figure 7 shows the mechanism for adjusting the height and length of the cushion pan 1. The nose portion 19 of the cushion pan 1 is supported on and guided by two tubular stubs 22. Rotation of the hand wheel 20 causes two movements to take place; firstly a shaft 23 along the axis of the hole 21 is caused to rotate; thereby bevelled gear mechanisms 24 converts the rotary motion to a linear motion so as to cause extension of a screw jack 25. This in turn causes the nose portion 19 to move forwards and thus increase the length of the cushion pan 1. Secondly, rotation of the hand wheel 20 transmits, by means of a bevelled gear mechanism 25, rotary motion to a threaded steel shaft 26 which is coaxial with a counterbalance spring (not shown). The shaft 26 engages with a trunion 28 passing through a toggle linkage 29 to thereby form a jacking mechanism. The lower link 29A of the toggle linkage 29 is attached to the lower member 12 of the structural member 3 and the upper link 29B to the rear of the side portion 1B of the cushion pan 1. Movement of the trunion 28 along the shaft 26 thus raises and lowers the rear of the cushion pan 1 to pivot the pan about the axis of the shaft 23 simultaneously with movement of the nose portion 19. Other types of mechanism to alter the height of the cushion pan 1 could, of course, be used.

The illustrated mechanism could easily be modified so that the height adjustment lifted both the front and rear portions of the cushion pan whereby the inclination of the pan relative to the vehicle floor would remain substantially constant as its height is adjusted. There are a number of conventional height adjusting mechanisms which would be suitable for this purpose.

In the illustrated embodiment, the height of the cushion pan is adjusted relative to the squab. However, it would be equally possible to adjust the height of the entire seat relative to the floor of the vehicle and there are also a number of conventional height adjusting mechanisms suitable for this.

The simultaneous adjustment of the height and length of the cushion pan 1 enables a person sitting in the seat to attain a comfortable position more easily than with conventional systems. The preferred arrangement is for the cushion pan to be lowered simultaneously with an adjustment to lengthen it so that a tall driver can adjust the length of the cushion pan to suit the length of his legs and simultaneously lower the seat so that his line of sight falls within the optimum zone relative to the vehicle windscreen.

The described mechanism for adjusting the length of the cushion pan achieves this by increasing the length of the pan itself. However, it would also be possible to achieve the required adjustment by sliding a cushion pan of fixed length forwards with respect to the squab so as to increase the length of the pan projecting from beneath the squab. It will also be appreciated that the adjustment described could be effected automatically, for instance by means of an electronically controlled motor turning the shaft on which the hand wheel 20 is mounted. This would enable adjustments to be made in accordance with a pre-set memory.

A number of improvements to vehicle seats have been described above and it will be appreciated that these may be employed separately from each other or together, particularly in the combinations illustrated and those referred to in the claims.

0173511

CLAIMS

1.  A vehicle seat having a cushion pan comprising a seat portion which is integrally formed with a front portion of the cushion pan so as to be hingedly attached thereto and resilient means providing a suspension for the seat portion with respect to the remainder of the cushion pan.

2.  A seat as claimed in claim 1 in which the side portions of the cushion pan are integrally formed with the front portion thereof.

3.  A seat as claimed in claim 1 or 2 in which the resilient means are springs connecting the seat portion to the remainder of the cushion pan.

4.  A seat as claimed in claims 2 and 3 in which the springs are connected between each lateral edge of the seat portion and the adjacent side portion of the cushion pan.

5.  A vehicle seat having a squab comprising a back rest portion which is integrally formed with an upper portion of the squab so as to be hingedly attached thereto and resilient means providing a suspension for the back rest portion with respect to the remainder of the squab.

0173511

6. A vehicle seat having a squab with a back rest panel which is shaped so as to provide lumbar support for an occupant of the seat, the entire back rest panel being selectively moveable with respect to the squab between a plurality of positions to adjust the distance between the cushion pan and the shaped area of the back rest panel.

7. A seat as claimed in claim 6 in which the squab and back rest panel are provided with a plurality of mutually engageable parts for holding the back rest panel in the said positions.

8. A seat as claimed in claim 7 in which the mutually engageable parts comprise complementary teeth on the squab and on the back rest panel.

9. A seat as claimed in claim 7 or 8 in which the mutually engageable parts are inclined with respect to the plane of the squab so as to provide fore and aft adjustment of the shaped area of the back rest panel as the distance between the said area and the cushion is adjusted.

10. A seat as claimed in any of claims 7 to 9 arranged such that adjustment of the back rest panel can be effected by manually disengaging the said mutually engageable parts and shifting the back rest panel upwardly or downwardly with respect to the squab.

11. A vehicle seat having a cushion pan the length and height of which can be adjusted simultaneously, the cushion pan comprising a control member which is drivingly connected to a first mechanism arranged to adjust the length of the cushion pan and to a second mechanism arranged to adjust the height of at least a portion of the cushion pan relative to a structure for connecting the seat to a support on a vehicle floor.

12. A seat as claimed in claim 11 in which the cushion pan has a nose portion mounted at the front thereof so as to be moveable fore and aft with respect to the remainder of the cushion pan.

13. A seat as claimed in claim 12 in which the first mechanism is arranged to convert rotary motion of the control member to a linear motion for driving the nose portion fore and aft.

14. A seat as claimed in any of claims 11 to 13 in which the second mechanism comprises means for lifting and lowering a rear portion of the cushion pan relative to the seat squab.

15. A seat as claimed in claim 14 in which the second mechanism comprises means for lifting and lowering a front portion of the cushion pan relative to the seat squab.

16. A seat as claimed in any of claims 11 to 13 in which the second mechanism comprises means for lifting substantially the entire seat relative to the said structure.

FIG. 1.

FIG. 2.

FIG.3.

FIG. 4.

FIG. 5.

# FIG. 6.

FIG. 7.